# EUROPEAN PATENT SPECIFICATION

(11) **EP 2 969 430 B1**
(45) Date of publication and mention of the grant of the patent: **29.11.2017**
(21) Application number: 14780265.6
(22) Date of filing: 07.03.2014
(51) Int. Cl.: B27G 3/00, B27B 5/26, B23D 45/06, B23Q 11/02

(54) **POWER TOOL WITH REMOVABLE DUST COMPARTMENT**
ELEKTROWERKZEUG MIT ENTFERNBAREM STAUBFACH
OUTIL ÉLECTRIQUE AVEC COMPARTIMENT À POUSSIÈRE AMOVIBLE

(30) Priority: 12.03.2013 US 201361777302 P
(43) Date of publication of application: 20.01.2016
(73) Proprietor: Robert Bosch GmbH, 70442 Stuttgart (DE)
(72) Inventor: TAYLOR, Brian, Chicago, IL 60640 (US); FROLOV, Andrew, Glenview, IL 60025 (US)
(86) International application number: PCT/US2014/021671
(87) International publication number: WO 2014/164276

(56) References cited:
- US-A- 2 793 661
- US-A- 4 063 478
- US-A- 4 063 478
- US-A- 4 576 072
- US-A1- 2002 112 582
- US-A1- 2004 206 220
- US-A1- 2010 307 308
- US-A1- 2011 023 674
- US-A1- 2011 023 674
- US-A1- 2012 036 972
- US-A1- 2012 090 440

## Description

### Technical Field

This disclosure relates to power table saws and more particularly to a power tool according to the preambles of claims 1 and 6.

Such a power tool is known from US 2010/307308 A1.

### Background

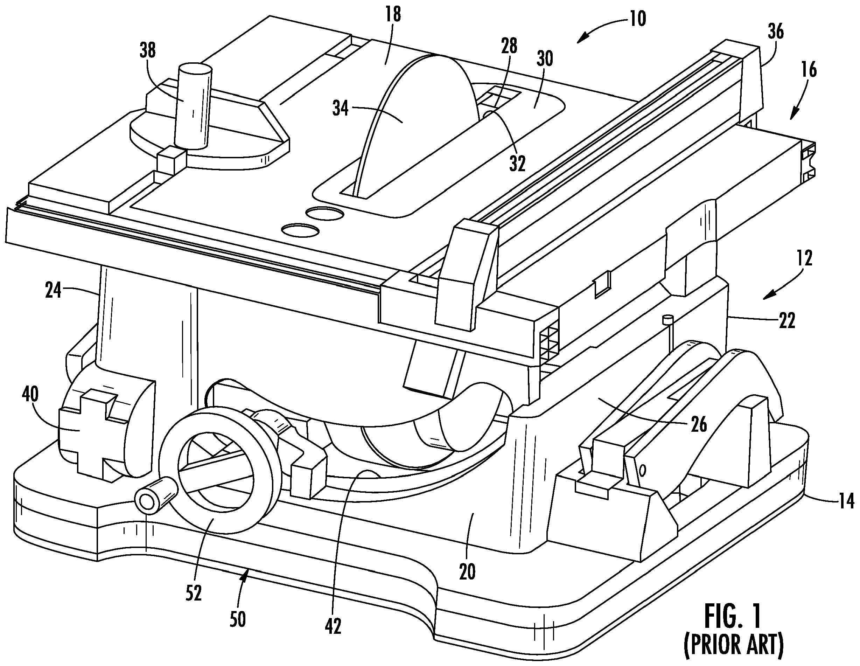

Power tools such as table saws, miter saws, bevel saws, compound saws, planers, vertical saws, circular saws, or the like are used in the construction and wood working industries. When a blade of a table saw or a cutterhead of a planer comes in contact with a workpiece, e.g., a piece of lumber, to cut the workpiece, dust and debris are generated as a result of the cutting. Power saw machines are typically equipped with dust management and collection features. An example of a prior art table saw with a dust management system is depicted in FIGs. 1-3 (titled "Prior Art").

A table saw 10 depicted in FIG. 1 includes a base assembly 12, a base structure 14, and a table top assembly 16 which has a table top surface 18. The base assembly 12 has generally vertical walls, including a front wall 20, a rear wall 22, and left and right side walls 24 and 26, respectively. The table top assembly 16 has an opening 28 in which a blade access insert 30 fits, with the insert 30 having an elongated slot 32 through which a blade 34 extends. The saw assembly also preferably includes a rip fence 36, a miter fence 38, and a power switch 40.

These general components are typical of portable table saws that can be easily transported to a jobsite where they can be used in conjunction with construction, remodeling, and similar projects. While it is important that such portable table saws be relatively lightweight so that they can be carried without difficulty from a vehicle to a use location, it is also important that the saws be durable and provide a stable work surface.

The front wall 20 includes an arcuate slot 42 that is provided to enable portions of an undercarriage assembly 50 to extend outside of the base assembly 12 for the purposes of manipulating the height of the blade 34 that extends above the top surface 18 of the table top assembly 16, as well as adjusting the angle of the blade 34 relative to the top surface 18. As shown in FIG. 1, the blade 34 is shown substantially perpendicular to the top surface 18, however the angle of the blade 34 relative to the top surface 18 can be adjusted to, for example, 45° relative to the table top 18 in either direction. The undercarriage assembly 50 includes a hand crank 52 that can be rotated along the length of the slot 42 to change the angle of the blade 34.

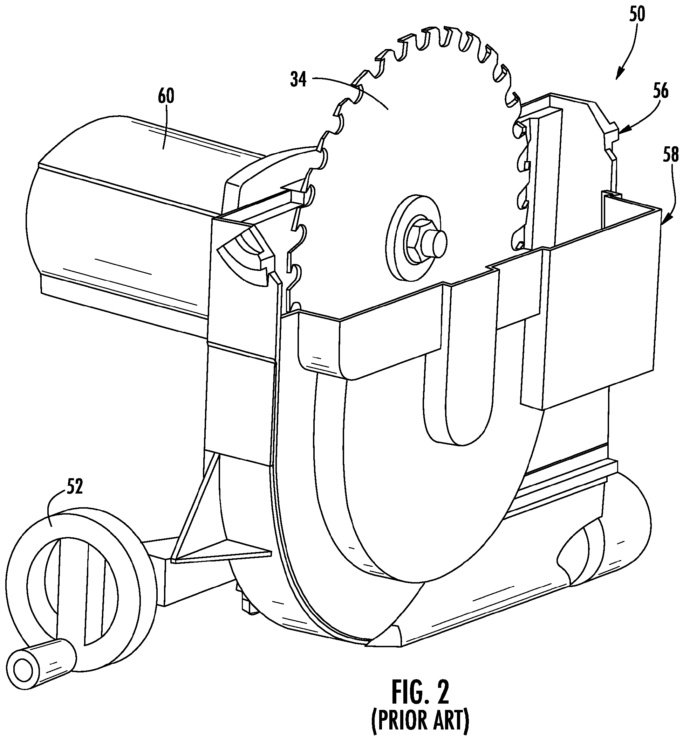

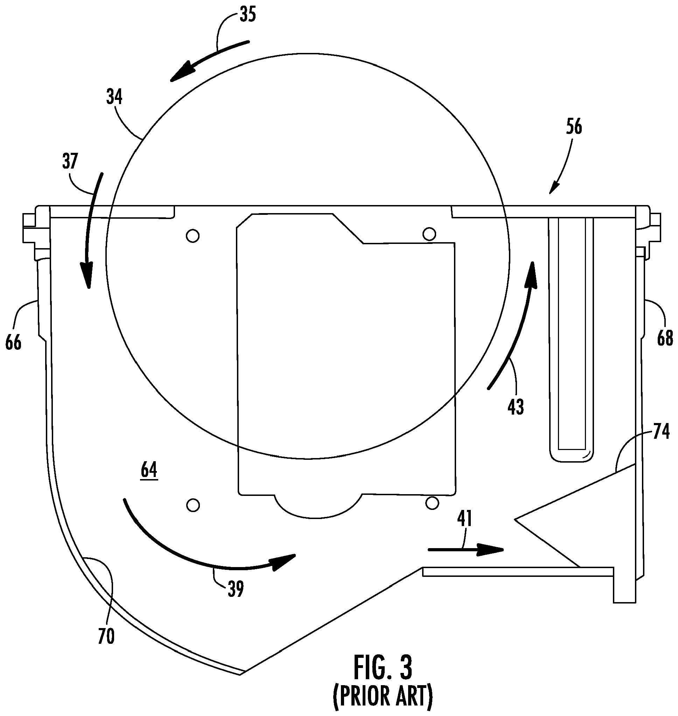

Turning now to FIG. 2, the undercarriage assembly 50 has a frame member 56, and a cover member 58 which together form a narrow housing that substantially encloses the portion of the blade 34 which extends beneath the table top assembly 16. The undercarriage assembly 50 also includes a motor 60 which is mounted on a movable plate mechanism (not shown), and which fits within an opening 62 (shown in FIG. 3) in the frame 56. The cover member 58 includes a dust port 88 configured to be coupled to a dust bag (not shown) or a vacuum system (not shown).

Turning now to FIG. 3, the frame member 56 includes a main side wall 64 and end wall portions 66 and 68 that are preferably integrally formed with the main side wall 64. The end wall 66 has a curved lower portion 70 that extends to the bottom thereof with the curvature generally corresponding to the curvature of the largest blade 34 to be used with the saw. The opposite end wall 68 extends in a generally straight direction downwardly to an inwardly extending wedge 74 configured to provide a boundary or barrier for directing air produced by rotation of the blade 34 to create an airflow that is desirable for expelling saw dust and other material produced during operation of the saw.

The saw blade 34 is configured to cut a workpiece by turning in a counterclockwise direction as depicted by an arrow 35. The housing formed by the frame member 56 and the cover 58 forms a path for the dust and debris generated when the saw blade 34 comes in contact with the workpiece. This path is defined by counterclockwise sections that are depicted by arrows 37, 39, 41, and 43. The dust and debris first enter the frame member 56 and partially travel within the frame member 56, according to the arrows 37 and 39. Part of the dust and debris exit the table saw 10 through the dust port (shown in FIG. 2), as depicted by the arrow 41. A small amount of the dust and debris may continue the counterclockwise rotation, as depicted by the arrow 43, and exit out of the table saw 10 through the saw blade opening 32 (shown in FIG. 1) at a high rate of speed, which can be annoying to the user of the table saw. In addition, part of the dust and debris that enters the housing may not exit the housing, but become stuck to the inside surfaces of the cover member 58 and wall portions 64, 66, and 68 of the frame member 56 and in the corners of the housing forming a coating which is conducive to further accumulation of more dust and debris. As a result, while dust and debris are channeled into and through the housing, typically table saws of the prior art do not effectively manage the dust and debris within the housing.

Additionally, while the dust port can evacuate a substantial amount of dust and debris that is produced during operation of the table saw 10, the volume underneath of the table top assembly 16 may not be entirely cleared of debris, particularly larger pieces thereof that are not effectively entrained in the airflow that is being removed by operation of the vacuum system (not shown). Thus, such dust and debris may accumulate in the bottom of the table saw 10 which need to be removed.

Some table saws have an opening in a rear panel of the saw for gaining access to the material that may become accumulated on the bottom of the base assembly. However, it is sometimes necessary to turn the saw on its side or even upside down in order to effectively remove all of the material that has been accumulated. It is also sometimes necessary for a bottom cover to be removed in order to access the interior of the table saw for clean-up. These latter actions are often inconvenient and time-consuming to complete.

Therefore, it is highly desirable to provide a dust management system which not only minimizes dust and debris that escape the compartment, but also includes a compartment that is easily removed from the table saw to be cleaned of accumulated dust and debris and then easily replaced.

### Summary

The present disclosure addresses the need for a removable dust compartment for a power tool. The present invention provides a power tool according to claims 1 and 6. The power tool includes a base assembly, a table top assembly supported by the base assembly, and an undercarriage frame positioned within the base assembly. The table top assembly includes a top surface with an opening configured to receive a rotatable blade. The undercarriage frame includes a support member. The power tool also includes a motor that is supported by the support member and is configured to drive a drive shaft to rotate the rotatable blade. The power tool also includes a removable compartment received within the base assembly and removably coupled to the support member.

The removable compartment has a closed body portion configured to collect dust and debris generated by operation of the power tool and an open top portion. The removable compartment is configured to receive at least a portion of the rotatable blade extending below the table top assembly through the open top portion and within the closed body portion. The closed body portion of the removable compartment includes a support member wall configured to be removably coupled to the support member and a dust port integrally formed with the support member wall. The support member wall includes a plurality of baffles configured to direct a path of airflow generated by the rotatable blade through the removable compartment toward the dust port. The removable compartment further includes a wedge also configured to direct the path of airflow through the removable compartment toward the dust port. Accordingly, the removable compartment is configured to facilitate evacuation of dust and debris from the removable compartment via the dust port.

The removable compartment is also configured to be easily removed from the support member for cleaning and easily replaced on the support member for reuse. To this end, the support member wall of the removable compartment includes an opening configured to receive a portion of the drive shaft. The opening extends to the open top portion of the removable compartment such that removal and replacement of the removable compartment does not interfere with any portion of the power tool. The support member wall also includes a plurality of openings configured to engage with a corresponding plurality of fixed mounts on the support member. The engagement of the openings and fixed mounts is such that the removable compartment can be easily removed for cleaning and replaced for reuse with the power tool.

### Brief Description of the Drawings

FIG. 1 depicts a perspective view of a prior art table saw.
FIG. 2 depicts a perspective view of an undercarriage assembly of the prior art table saw of FIG. 1.
FIG. 3 depicts a front elevational view of a portion of an undercarriage frame of the prior art table saw of FIG. 1.
FIG. 4 depicts a perspective view of an undercarriage assembly including a removable compartment for use in a power tool such as the prior art table saw of FIG. 1.
FIG. 5 depicts a front elevational view of a portion of the removable compartment of FIG. 4.
FIG. 6 depicts a front elevational view of a portion of the undercarriage assembly and a portion of the removable compartment of FIG. 4.
FIG. 7 is a schematic drawing depicting a front view of an opening in the removable compartment of FIG. 4.
FIG. 8 is a schematic drawing depicting a side view of a mount formed on the undercarriage assembly of FIG. 4 which corresponds with the opening of FIG. 7.
FIG. 9 is a schematic drawing depicting a cross-sectional view of the mount of FIG. 8 engaged with the opening of FIG. 7.
FIG. 10 depicts a perspective view of another undercarriage assembly including a removable compartment for use in a power tool such as the prior art table saw of FIG. 1

### DETAILED DESCRIPTION

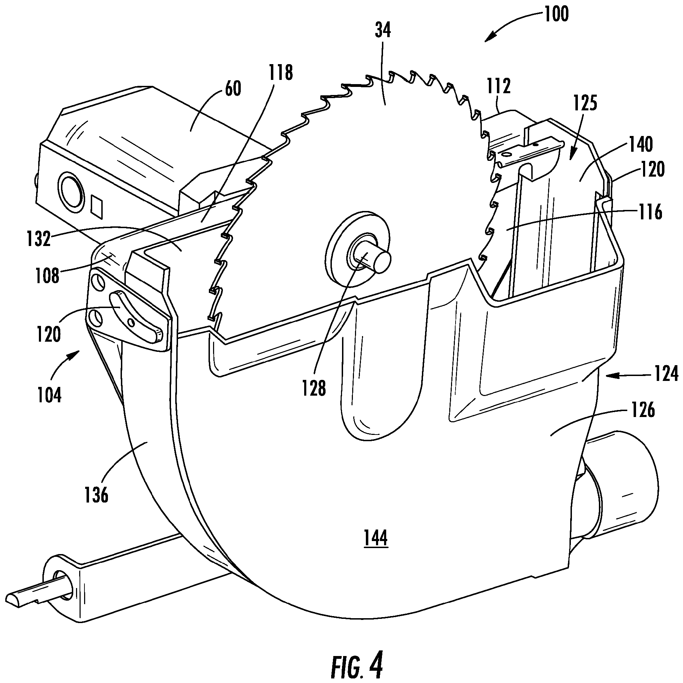

Turning now to FIG. 4, an undercarriage assembly 100 is shown that is configured for use with power tools such as the table saw 10 shown in FIG. 1 and described above. The undercarriage assembly 100 includes a frame assembly 104 having a support member 108. The frame assembly 104 is configured to support a motor 60 having a drive shaft 128 rotatably coupled to a rotatable blade 34. The support member 108 has a motor facing side 112 arranged to face the motor 60, a blade facing side 116 arranged to face the blade 34, and a top surface 118 arranged between the motor facing side 112 and the blade facing side 116 so as to face upwardly. The support member 108 also includes pivot portions 120 configured to engage a cooperatively shaped bracket (not shown) provided on the underside of the table top assembly to act as pivot points for the undercarriage assembly 100. The pivot portions 120 are arranged on opposite ends of the support member 108 extending outwardly substantially perpendicularly from the blade facing side 116.

The undercarriage assembly 100 further includes a removable compartment 124 configured to be removably coupled to the blade facing side 116 of the support member 108. The removable compartment 124 includes an open top portion 125 and a closed body portion 126 which can be formed of metal or hard plastic material which will not shatter or become damaged by debris within the removable compartment 124. The closed body portion 126 is configured to collect dust and debris generated by the saw during use. The open top portion 125 is configured to receive at least a portion of the rotatable blade 34 which extends below the table top assembly through the open top portion 125 and into the closed body portion 126. The closed body portion 126 of the removable compartment 124 includes a support member wall 132, a first side wall 136, a second side wall 140, and an outward wall 144. The support member wall 132 is configured to be removably coupled to the blade facing side 116 of the support member 108 and is therefore shaped in a manner that is complementary to the blade facing side 116.

The first side wall 136 and second side wall 140 are preferably integrally formed with the support member wall 132 and are shaped to fit snugly within the pivot portions 120 of the support member 108. The outward wall 144 is coupled to the first and second side walls 136, 140 so as to be opposite and substantially parallel to the support member wall 132. In a preferred embodiment, the outward wall 144 is irremovably coupled to the first and second side walls 136, 140 by, for example, press-fitting, welding, or molding. In other embodiments, however, the outward wall 144 can be removably coupled to the first and second side walls 136, 140 by, for example, a snap-fit arrangement.

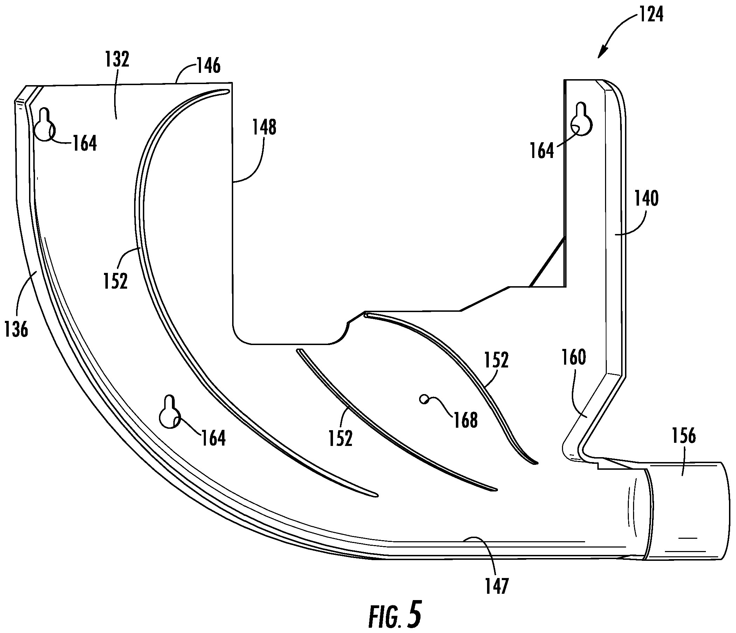

Turning now to FIG. 5, the support member wall 132 and first and second side walls 136, 140 of the removable compartment 124 are shown in isolation. The support member wall 132 includes a top 146, a bottom 147, and an opening 148. The opening 148 extends to the top 146 of the support member wall 312 and is configured to receive the drive shaft 128 (shown in FIG. 4) to enable the blade 34, coupled to the motor 60 via the drive shaft 128, to be arranged between the support member wall 132 and the outward wall 144. The support member wall 132 also includes a plurality of baffles 152 projecting into the removable compartment 124. The baffles 152 project substantially perpendicularly from the support member wall 132 and are shaped to direct the path of airflow generated by the blade 34 within the removable compartment 124. In the embodiment shown, the support member wall 132 includes three baffles 152 spaced apart from one another between the top 146 and the bottom 147 of the support member wall 132 and between the first side wall 136 and the second side wall 140. In an alternative embodiment, the support member wall 132 can include more or fewer than three baffles 152 configured to direct the path of airflow within the removable compartment 124. In yet another alternative embodiment, the outward wall 144 can also include at least one baffle like the baffles 152 projecting into the removable compartment 124 and configured to direct the path of airflow.

The removable compartment 124 also includes a dust port 156 associated with or integrally formed with the support member wall 132 and the second side wall 140. The first side wall 136 of the removable compartment 124 extends in a curve from the top 146 of the support member wall 132 toward the dust port 156. The second side wall 140 extends generally straight downwardly from the top 146 of the support member wall 132 toward the dust port 156 and includes a wedge 160 above and adjacent to the dust port 156 that is configured to direct the path of airflow in the removable compartment 124 toward the dust port 156. The dust port 156 is configured to be coupled to a vacuum source (not shown).

The support member wall 132 also includes a plurality of openings extending through the support member wall 132. In the embodiment shown, the support member wall 132 includes three key hole openings 164 and one fastening opening 168 spaced apart from one another. In alternative embodiments, however, the support member wall 132 can include more or fewer of each of the key hole openings and screw openings. In other alternative embodiments, the support member wall 132 can also include other types of openings configured for removability of the removable compartment 124. In the embodiment shown, a key hole opening 164 is formed adjacent to the top 146 of the support member wall 132 and adjacent to each side wall 136, 140. Another key hole opening 164 is formed nearer to the bottom 147 of the support member wall 132 and adjacent to the first side wall 136. The fastening opening 168 may be formed beneath the opening 148 and nearer to the second side wall 140 than the first side wall 136. The spacing of the openings on the support member wall 132 facilitates secure support of the removable compartment 124 on the support member 108. In alternative embodiments, the openings can be formed in different locations along the support member wall 132 to facilitate secure support of the removable compartment 124 on the support member 108.

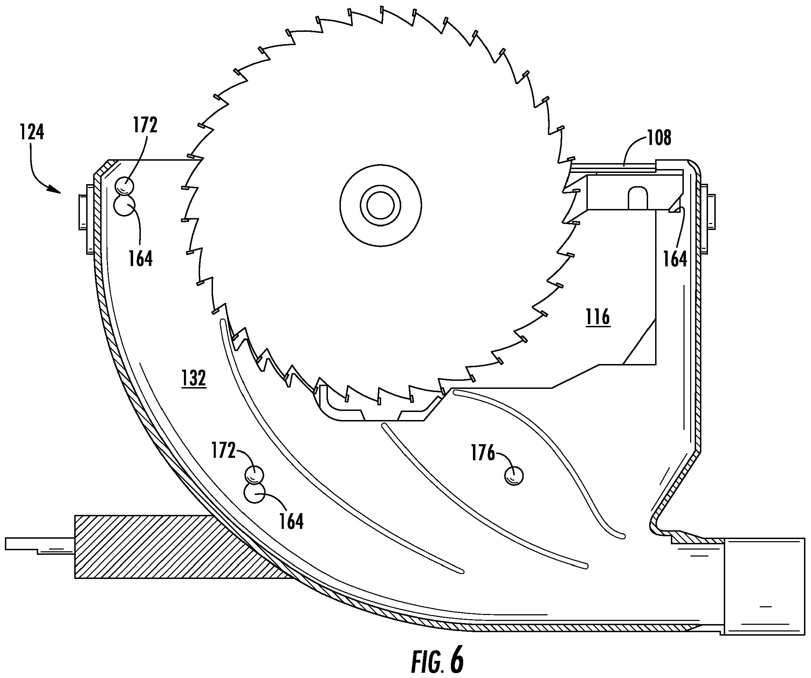

Turning now to FIG. 6, the removable compartment 124 (without the outward wall 144) is shown coupled to the support member 108. As shown, the key hole openings 164 in the support member wall 132 are configured to engage with corresponding fixed mounts 172 on the blade facing side 116 of the support member 108 to couple the removable compartment 124 to the support member 108. Additionally, a fastening member 176 is configured to be inserted through the fastening opening 168 (shown in FIG. 5) and into a corresponding opening (not shown) in the blade facing side 116 of the support member 108 to further couple the removable compartment 124 to the support member 108. By way of example, the fastening member 176 can be a screw and the fastening opening 168 and corresponding opening in the blade facing side 116 can be threaded openings. In alternative embodiments having different numbers and locations of openings in the support member wall 132, the corresponding mounts and openings formed on the support member 108 also differ in number and location to maintain correspondence with the openings in the support member wall 132. In some alternative embodiments, the support member wall 132 does not include a fastening opening 168 to receive a fastening member. In such embodiments, the support member wall 132 is coupled to the support member 108 by corresponding key hole openings 164 and fixed mounts 172 alone.

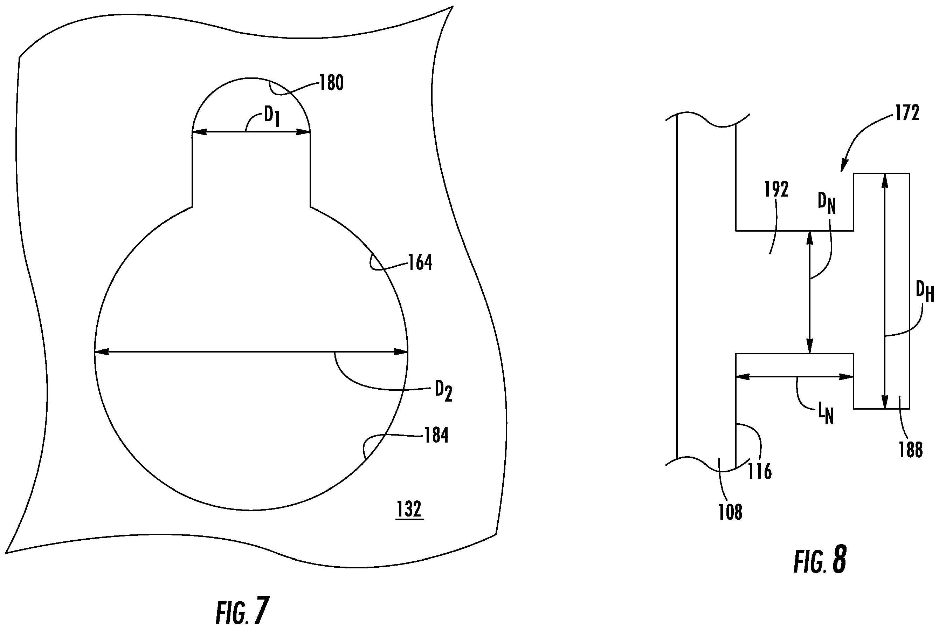

FIG. 7 is an enlarged drawing of a key hole opening 164 formed in the support member wall 132. The key hole opening 164 includes a smaller portion 180 having a first diameter D₁ and a larger portion 184 having a second diameter D₂ which is larger than the first diameter D₁. The larger portion 184 is arranged directly below the smaller portion 180 and is in open communication with the smaller portion 180. A transition formed where the larger portion 184 meets the smaller portion 180 has a dimension equal to the first diameter D₁ of the smaller portion 180. In alternative embodiments, the key hole openings 164 can have different geometries maintaining a smaller portion having a smaller diameter positioned above a larger portion having a larger diameter.

FIG. 8 is a schematic drawing of a side view of a fixed mount 172 projecting from the blade facing side 116 of the support member 108. The fixed mount 172 includes a head 188 having a head diameter D_{H} and a neck 192 having a neck diameter D_{N} and a neck length L_{N}. The neck 192 projects outwardly and substantially perpendicularly from the blade facing side 116 of the support member 108 and the head 188 is arranged on the neck 192 opposite the support member 108.

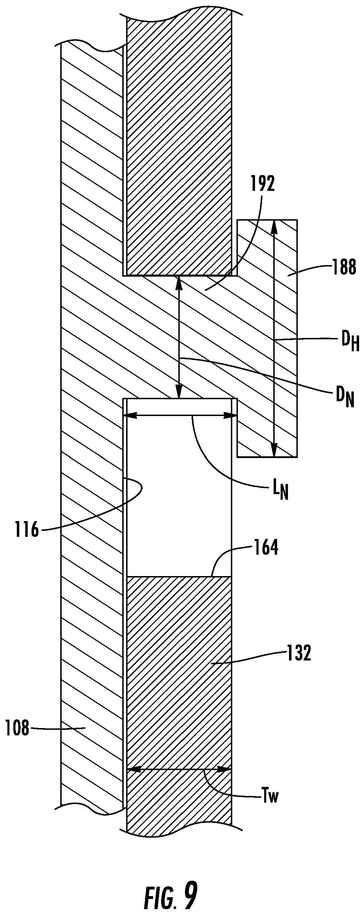

FIG. 9 is a cross-sectional drawing of a portion of a key hole opening 164 in the support member wall 132 engaged with a corresponding fixed mount 172 on the support member 108. The head diameter D_{H} is larger than the first diameter D₁ of the smaller portion 180 but is smaller than the second diameter D₂ of the larger portion 184 (shown in FIG. 7) of the key hole opening 164. Accordingly, the head 188 can pass through only the larger portion 184 of the key hole opening 164. More specifically, the second diameter D₂ is larger than the head diameter D_{H} such that there is clearance between the head 188 and the larger portion 184 to enable the key hole opening 164 to be easily fitted over the fixed mount 172. The neck diameter D_{N} is smaller than the first diameter D₁ of the smaller portion 180 of the key hole opening 164. Accordingly, once the head 188 has passed through the larger portion 184, smaller portion 180 of the key hole opening 164 can be lowered onto the neck 192 of the fixed mount 172. As shown, the support member wall 132 has a thickness T_{W} which is less than the neck length L_{N} to enable the key hole opening 164 to be entirely received on the neck 192.

In some alternative embodiments, the fixed mounts can be hook-shaped projections configured to be inserted into correspondingly shaped openings.

Returning now to FIG. 4, the removable compartment 124 (with the outward wall 144) is shown coupled to the support member 108. The outward wall 144 includes an access area 196 which is spaced farther apart from the support member wall 132 than the remainder of the outward wall 144. The access area 196 facilitates access to the fastening member 176 and the fastener (shown in FIG. 6) within the removable compartment 124.

The removable compartment 124 described above facilitates passage of dust and debris through the compartment and into an attached vacuum source due to the shapes of the support member wall 132, the first side wall 136, and the second side wall 140 as well as the baffles 152 and the wedge 160. Additionally, the support member 108 and removable compartment 124 described above facilitate easy removal of the removable compartment 124 for cleaning out dust and debris which are not passed through the compartment, and easy replacement of the removable compartment 124 for subsequent reuse.

The removable compartment 124 is removed from the support member 108 by first removing the fastening member 176 from the fastening opening 168 and the corresponding opening in the support member 108. Access to the fastening member 176 is facilitated by the access area 196 in the outward wall 144. In embodiments of the removable compartment 124 having no fastening opening 168 and no fastening member 176, this first action is unnecessary. Once the fastening member 176 has been removed from the fastening opening 168 (if applicable), the entire removable compartment 124 can be lifted upwardly relative to the support member 108. The upward movement of the removable compartment 124 lifts the smaller portions 180 of the key hole openings off the necks 192 of the fixed mounts 172 and aligns the heads 188 of the fixed mounts 172 with the larger portions 184 of the corresponding key hole openings 164. Once the heads 188 are aligned with the larger portions 184, the removable compartment 124 can be moved away from the support member 108, passing the heads 188 through the corresponding larger portions 184, to disengage the removable compartment 124 from the support member 108. Next, the removable compartment 124 can be lowered down between the support member 108 and the blade 34 to a position below the frame assembly 104 and removed from below the undercarriage assembly 100. Because the opening 148 extends all the way to the top 146 of the support member wall 132, the removable compartment 124 can be lowered down and removed from the frame assembly 104 without interfering with the drive shaft 128 or any other portion of the frame assembly 104.

Once the removable compartment 124 is removed from the undercarriage assembly 100, accumulated dust and debris is easily eliminated from the removable compartment 124 by dumping, brushing, vacuuming, or otherwise emptying out the removable compartment 124. Once the removable compartment 124 is cleaned, it is thereafter easily reattachable to the undercarriage assembly 100 by reversing the removal process. Specifically, to reattach the removable compartment 124 to the undercarriage assembly 100, the removable compartment 124 is first placed under the blade 34 and then lifted upwardly so that the blade 34 is generally received therein. The opening 148 prevents interference of the removable compartment 124 with other features of the undercarriage assembly 100 while raising the removable compartment 124 to receive the blade 34. The removable compartment 124 is then moved toward the support member 108 such that the heads 188 of the fixed mounts 172 pass through the larger portions 184 (shown in FIG. 7) of the corresponding key hole openings 164 and the support member wall 132 of the removable compartment 124 abuts the support member 108. The removable compartment 124 is then dropped downwardly so that the smaller portions 180 (shown in FIG. 7) of the key hole openings 164 rest on the necks 192 of the fixed mounts 172. Finally, (if applicable) a fastening member 176 is introduced into the removable compartment 124 via the access area 196 (shown in FIG. 4) and inserted through the fastening opening 168 in the support member wall 132 (shown in FIG. 5) and into the corresponding fastening opening in the support member 108. The reception of the fixed mounts 172 within the corresponding key hole openings 164 and of the fastening member 176 within the fastening opening 168 and the corresponding fastening opening in the support member 108 securely attaches the removable compartment 124 to the support member 108 such that the table saw assembly is ready to be used for additional cutting operations.

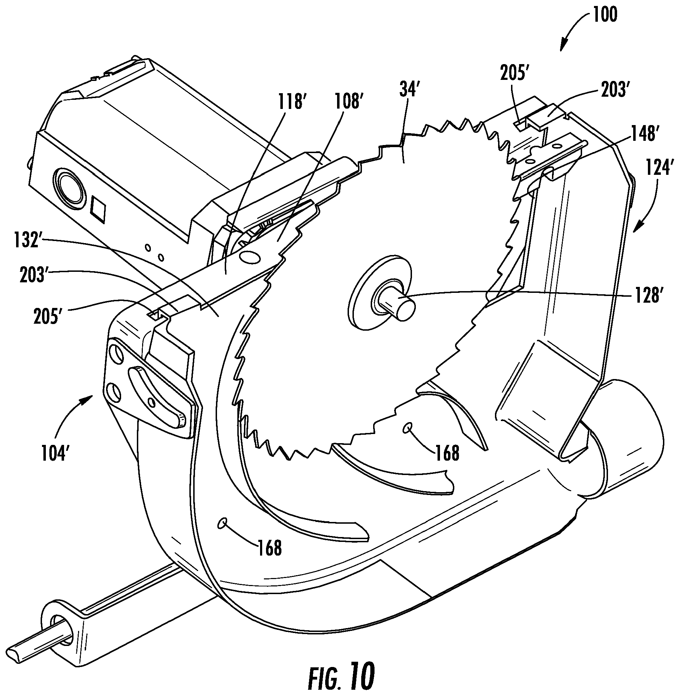

FIG. 10 depicts an alternative embodiment of the undercarriage assembly 100 including a frame assembly 104' and a removable compartment 124'. As in FIG. 6, the outward wall is not shown in FIG. 10 for clarity. The frame assembly 104' and the removable compartment 124' are substantially similar in form and function to the frame assembly 104 and removable compartment 124 described above. For clarity, parts of the frame assembly 104' and removable compartment 124' that are similar to parts of the frame assembly 104 and removable compartment 124 are identified by similar reference numerals. The frame assembly 104' and the removable compartment 124' differ from the frame assembly 104 and the removable compartment 124, however, in the manner of assembly. In particular, the support member 108' of the frame assembly 104' does not include any fixed mounts and the removable compartment 124' does not include any key hole openings.

As shown in FIG. 10, the removable compartment 124' includes hooks 203' projecting from the top 146' of the support member wall 132' in a direction opposite to the first side wall 136' and second side wall 140'. The support member 108' includes corresponding hook slots 205' formed in the top surface 118' of the support member 108' and configured to receive the hooks 203' such that when the hooks 203' are received within the hook slots 205', gravity causes the removable compartment 124' to hang suspended from the support member 108'. The support member wall 132' further includes fastening openings 168' where the support member wall 132 includes key hole openings 164. Accordingly, the support member 108' includes corresponding fastening openings (not shown) like the fastening opening in the support member 108 that are positioned and configured to align with the fastening openings 108' when the removable compartment 124' is coupled to the support member 108' via reception of the hooks 203' within the hook slots 205'. Fastening members (not shown) like the fastening member 176 shown in FIG. 6 are configured to be received through the fastening openings 168' in the removable compartment 124' and within the corresponding fastening openings in the support member 108'.

To remove the removable compartment 124' from the support member 108' for cleaning, the fastening members are accessed within the removable compartment 124' via access areas (not shown) like the access area 196 shown in FIG. 4. The fastening members are removed from each corresponding fastening opening 168' in the support member wall 132' and corresponding fastening opening in the support member 108'. Then, once all of the fastening members have been removed, the removable compartment 124' is lifted relative to the support member 108' to lift the hooks 203' out of the hook slots 205'. Lifting the hooks 203' from the hook slots 205' disengages the removable compartment 124' from the support member 108'. The removable compartment 124' is then pulled outwardly from the frame assembly 104' and dropped downwardly so that the removable compartment 124' can be removed from beneath the blade 34'.

Once the removable compartment 124' has been cleaned, the removable compartment 124' can be reattached to the support member 108' by reversing the removal process. Specifically, the removable compartment 124' is arranged under the blade 34' and then lifted upwardly so that the blade 34' is generally received therein. The opening 148' prevents interference of the removable compartment 124' with the drive shaft 128' or other features of the undercarriage assembly 100' while raising the removable compartment 124' to receive the blade 34'. The removable compartment 124' is then moved toward the support member 108' to position the hooks 203' above and aligned with the hook slots 205'. The removable compartment 124' is then dropped downwardly so that the hooks 203' are received within the hook slots 205'. Finally, the fastening members 176' are introduced into the removable compartment 124' via the access areas and are inserted through corresponding fastening openings 168' in the support member wall 132' and into corresponding fastening openings in the support member 108'. The reception of the hooks 203' within the hook slots 205' and of the fastening members 176' within the fastening openings 168' and the fastening openings on the support member 108' securely attaches the removable compartment 124' to the support member 108' such that the table saw assembly is ready to be used for additional cutting operations.

In an alternative embodiment, the frame assembly and the removable compartment can be coupled to one another by magnets elements. The magnet elements can be integrated into the support member and the removable compartment, mounted on the support member and the removable compartment, or otherwise affixed to the support member and the removable compartment. In another alternative embodiment, the removable compartment can be formed of transparent material to enable viewing the inside of the removable compartment to facilitate attachment and removal of the removable compartment and to assist the user in knowing when the compartment needs to be cleaned.

While the invention has been illustrated and described in detail in the drawings and foregoing description, the same should be considered illustrative and not restrictive in character. Only the preferred embodiments have been presented and all changes, modifications and further applications that come within the scope of the invention as defined by the claims.

## Claims

1. A power tool, comprising:
1.1 a base assembly;
1.2 a table top assembly supported by the base assembly and including a top surface with an opening configured to receive a rotatable blade;
1.3 an undercarriage frame positioned within the base assembly;
1.4 a motor (60) supported by the undercarriage frame and configured to drive a drive shaft (128) to rotate the rotatable blade; and
1.5 a removable compartment (124) removably coupled to the undercarriage frame (104), the removable compartment having a closed body portion (126) configured to collect material and an open top portion (125), the removable compartment configured to receive at least a portion of the rotatable blade extending through the open top portion,
1.6 wherein the closed body portion (126) of the removable compartment includes an opening (148) configured to receive a portion of the drive shaft, the opening (148) extending to the open top portion (125) of the removable compartment; wherein
1.7 the undercarriage frame includes a plurality of fastening members (172), and the removable compartment includes a plurality of fastening openings (164) corresponding to the plurality of fastening members, each fastening opening (164) configured to receive a fastening member (172) to removably couple the removable compartment to the undercarriage frame; wherein:
1.8 each fastening member (172) has a head and a shaft, the head having a larger diameter than the shaft, **characterized in that**
1.9 each fastening opening (164) is configured to fit over the head of the corresponding fastening member; wherein
1.10 the fastening members (172) project from the undercarriage frame in a direction of the drive shaft; and wherein
1.11 the fastening openings (164) are key hole shaped.

2. The power tool of claim 1, wherein the closed body portion (126) of the removable compartment includes a port (156) configured to be connected to a vacuum source.

3. The power tool of claim 1, wherein the removable compartment (124) includes a support member wall and an outward wall arranged opposite the support member wall such that a portion of the rotatable blade is interposed between the support member wall and the outward wall.

4. The power tool of claim 3, wherein the removable compartment includes at least one baffle projecting from at least one of the support member wall and the outward wall into the closed body portion (126).

5. The power tool of claim 3, wherein the outward wall includes an access area (196) spaced farther from the support member wall than a remainder of the outward wall, the access area configured to enable access within the closed body portion (126).

6. A power tool, comprising:
6.1 a base assembly;
6.2 a table top assembly supported by the base assembly and including a top surface with an opening configured to receive a rotatable blade;
6.3 an undercarriage frame positioned within the base assembly;
6.4 a motor (60) supported by the undercarriage frame and configured to drive a drive shaft (128) to rotate the rotatable blade; and
6.5 a removable compartment (124') removably coupled to the undercarriage frame, the removable compartment (124') having a closed body portion (126) configured to collect material and an open top portion, the removable compartment (124') configured to receive at least a portion of the rotatable blade extending through the open top portion, wherein the closed body portion (126) of the removable compartment (124') includes an opening (148) configured to receive a portion of the drive shaft (128), the opening (148) extending to the open top portion (125) of the removable compartment (124'); wherein
6.6 the undercarriage frame includes a plurality of fastening openings (205'), and the removable compartment includes a plurality of fastening members (203') corresponding to the plurality of fastening openings (205'), each fastening member (203') configured to be received within a fastening opening (205') to removably couple the removable compartment to the undercarriage frame;
6.7 **characterized in that** the fastening openings (205') are arranged on atop surface of the undercarriage frame, and the fastening members (203') include hook-shaped projections configured to fit within the openings (205').

## Patentansprüche

1. Elektrowerkzeug, umfassend:
1.1 eine Basisanordnung;
1.2 eine Tischplattenanordnung, die durch die Basisanordnung gestützt wird und eine obere Fläche mit einer Öffnung enthält, die zur Aufnahme eines drehbaren Messers konfiguriert ist;
1.3 einen Untergestellrahmen, der in der Basisanordnung positioniert ist;
1.4 einen Motor (60), der durch den Untergestellrahmen gestützt wird und dazu konfiguriert ist, eine Antriebswelle (128) zur Drehung des drehbaren Messers anzutreiben; und
1.5 ein entfernbares Fach (124), das entfernbar mit dem Untergestellrahmen (104) gekoppelt ist, wobei das entfernbare Fach einen zum Sammeln von Material konfigurierten geschlossenen Körperteil (126) und einen offenen oberen Teil (125) aufweist, wobei das entfernbare Fach zur Aufnahme mindestens eines sich durch den offenen oberen Teil erstreckenden Teils des drehbaren Messers konfiguriert ist,
1.6 wobei der geschlossene Körperteil (126) des entfernbaren Fachs eine Öffnung (148) enthält, die zur Aufnahme eines Teils der Antriebswelle konfiguriert ist, wobei die Öffnung (148) zum offenen oberen Teil (125) des entfernbaren Fachs verläuft; wobei
1.7 der Untergestellrahmen mehrere Befestigungsglieder (172) enthält und das entfernbare Fach mehrere Befestigungsöffnungen (164) enthält, die den mehreren Befestigungsgliedern entsprechen, wobei jede Befestigungsöffnung (164) zur Aufnahme eines Befestigungsglieds (172) konfiguriert ist, um das entfernbare Fach entfernbar mit dem Untergestellrahmen zu koppeln; wobei:
1.8 jedes Befestigungsglied (172) einen Kopf und einen Schaft aufweist, wobei der Kopf einen größeren Durchmesser als der Schaft aufweist, **dadurch gekennzeichnet, dass**
1.9 jede Befestigungsöffnung (164) dahingehend konfiguriert ist, dass sie über den Kopf des entsprechenden Befestigungsglieds passt; wobei
1.10 die Befestigungsglieder (172) von dem Untergestellrahmen in eine Richtung der Antriebswelle ragen; und wobei 1.11 die Befestigungsöffnungen (164) schlüssellochförmig sind.

2. Elektrowerkzeug nach Anspruch 1, wobei der geschlossene Körperteil (126) des entfernbaren Fachs einen Kanal (156) enthält, der zur Verbindung mit einer Unterdruckquelle konfiguriert ist.

3. Elektrowerkzeug nach Anspruch 1, wobei das entfernbare Fach (124) eine Stützgliedwand und eine Außenwand enthält, die gegenüber der Stützgliedwand so angeordnet ist, dass ein Teil des drehbaren Messers zwischen der Stützgliedwand und der Außenwand angeordnet ist.

4. Elektrowerkzeug nach Anspruch 3, wobei das entfernbare Fach mindestens eine Prallfläche enthält, die von der Stützgliedwand und/oder der Außenwand in den geschlossenen Körperteil (126) vorragt.

5. Elektrowerkzeug nach Anspruch 3, wobei die Außenwand einen Zugangsbereich (196) enthält, der weiter von der Stützgliedwand beabstandet ist als ein Rest der Außenwand, wobei der Zugangsbereich dazu konfiguriert ist, Zugang im geschlossenen Körperteil (126) zu ermöglichen.

6. Elektrowerkzeug, umfassend:
6.1 eine Basisanordnung;
6.2 eine Tischplattenanordnung, die durch die Basisanordnung gestützt wird und eine obere Fläche mit einer Öffnung enthält, die zur Aufnahme eines drehbaren Messers konfiguriert ist;
6.3 einen Untergestellrahmen, der in der Basisanordnung positioniert ist;
6.4 einen Motor (60), der durch den Untergestellrahmen gestützt wird und dazu konfiguriert ist, eine Antriebswelle (128) zur Drehung des drehbaren Messers anzutreiben; und
6.5 ein entfernbares Fach (124'), das entfernbar mit dem Untergestellrahmen gekoppelt ist, wobei das entfernbare Fach (124') einen zum Sammeln von Material konfigurierten geschlossenen Körperteil (126) und einen offenen oberen Teil aufweist, wobei das entfernbare Fach (124') zur Aufnahme mindestens eines sich durch den offenen oberen Teil erstreckenden Teils des drehbaren Messers konfiguriert ist, wobei der geschlossene Körperteil (126) des entfernbaren Fachs (124') eine Öffnung (148) enthält, die zur Aufnahme eines Teils der Antriebswelle (128) konfiguriert ist, wobei die Öffnung (148) zum offenen oberen Teil (125) des entfernbaren Fachs (124') verläuft; wobei
6.6 der Untergestellrahmen mehrere Befestigungsöffnungen (205') enthält und das entfernbare Fach mehrere Befestigungsglieder (203') enthält, die den mehreren Befestigungsöffnungen (205') entsprechen, wobei jedes Befestigungsglied (203') zur Aufnahme in einer Befestigungsöffnung (205') konfiguriert ist, um das entfernbare Fach entfernbar mit dem Untergestellrahmen zu koppeln;
6.7 **dadurch gekennzeichnet, dass** die Befestigungsöffnungen (205') auf einer oberen Fläche des Untergestellrahmens angeordnet sind und die Befestigungsglieder (203') hakenförmige Vorsprünge enthalten, die so konfiguriert sind, dass sie in die Öffnungen (205') passen.

## Revendications

1. Outil électrique comprenant :
1.1 un ensemble de base ;
1.2 un ensemble de dessus de table supporté par l'ensemble de base et comportant une surface supérieure avec une ouverture configurée pour recevoir une lame rotative ;
1.3 un cadre de châssis positionné à l'intérieur de l'ensemble de base ;
1.4 un moteur (60) supporté par le cadre de châssis et configuré pour entraîner un arbre d'entraînement (128) pour faire tourner la lame rotative ; et
1.5 un compartiment amovible (124) accouplé de manière amovible au cadre de châssis (104),
le compartiment amovible ayant une partie de corps fermée (126) configurée pour recueillir des matériaux et une partie supérieure ouverte (125), le compartiment amovible étant configuré pour recevoir au moins une partie de la lame rotative s'étendant à travers la partie supérieure ouverte,
1.6 la partie de corps fermée (126) du compartiment amovible comportant une ouverture (148) configurée pour recevoir une partie de l'arbre d'entraînement, l'ouverture (148) s'étendant jusqu'à la partie supérieure ouverte (125) du compartiment amovible ;
1.7 le cadre de châssis comportant une pluralité d'organes de fixation (172), et le compartiment amovible comportant une pluralité d'ouvertures de fixation (164) correspondant à la pluralité d'organes de fixation, chaque ouverture de fixation (164) étant configurée pour recevoir un organe de fixation (172) pour accoupler de manière amovible le compartiment amovible au cadre de châssis ;
1.8 chaque organe de fixation (172) présentant une tête et une tige, la tête ayant un plus grand diamètre que la tige, **caractérisé en ce que**
1.9 chaque ouverture de fixation (164) est configurée pour s'ajuster par-dessus la tête de l'organe de fixation correspondant ;
1.10 les organes de fixation (172) faisant saillie depuis le cadre de châssis dans une direction de l'arbre d'entraînement ; et
1.11 les ouvertures de fixation (164) étant en forme de trou de serrure.

2. Outil électrique selon la revendication 1, dans lequel la partie de corps fermée (126) du compartiment amovible comporte un orifice (156) configuré pour être connecté à une source de vide.

3. Outil électrique selon la revendication 1, dans lequel le compartiment amovible (124) comporte une paroi d'organe de support et une paroi extérieure disposée à l'opposé de la paroi d'organe de support de telle sorte qu'une partie de la lame rotative soit interposée entre la paroi d'organe de support et la paroi extérieure.

4. Outil électrique selon la revendication 3, dans lequel le compartiment amovible comporte au moins une chicane faisant saillie depuis au moins l'une de la paroi d'organe de support et de la paroi extérieure à l'intérieur de la partie de corps fermée (126).

5. Outil électrique selon la revendication 3, dans lequel la paroi extérieure comporte une zone d'accès (196) espacée davantage de la paroi d'organe de support que le reste de la paroi extérieure, la zone d'accès étant configurée pour permettre l'accès à l'intérieur de la partie de corps fermée (126).

6. Outil électrique comprenant :
6.1 un ensemble de base ;
6.2 un ensemble de dessus de table supporté par l'ensemble de base et comportant une surface supérieure avec une ouverture configurée pour recevoir une lame rotative ;
6.3 un cadre de châssis positionné à l'intérieur de l'ensemble de base ;
6.4 un moteur (60) supporté par le cadre de châssis et configuré pour entraîner un arbre d'entraînement (128) pour faire tourner la lame rotative ; et
6.5 un compartiment amovible (124') accouplé de manière amovible au cadre de châssis, le compartiment amovible (124') ayant une partie de corps fermée (126) configurée pour recueillir des matériaux et une partie supérieure ouverte, le compartiment amovible (124') étant configuré pour recevoir au moins une partie de la lame rotative s'étendant à travers la partie supérieure ouverte, la partie de corps fermée (126) du compartiment amovible (124') comportant une ouverture (148) configurée pour recevoir une portion de l'arbre d'entraînement (128), l'ouverture (148) s'étendant jusqu'à la partie supérieure ouverte (125) du compartiment amovible (124') ;
6.6 le cadre de châssis comportant une pluralité d'ouvertures de fixation (205'), et le compartiment amovible comportant une pluralité d'organes de fixation (203') correspondant à la pluralité d'ouvertures de fixation (205'), chaque organe de fixation (203') étant configuré pour être reçu à l'intérieur d'une ouverture de fixation (205') pour accoupler de manière amovible le compartiment amovible au cadre de châssis ;
6.7 **caractérisé en ce que** les ouvertures de fixation (205') sont disposées sur une surface supérieure du cadre de châssis, et les organes de fixation (203') comportent des saillies en forme de crochet configurées pour s'ajuster à l'intérieur des ouvertures (205').
